(19)

Europäisches
Patentamt
European
Patent Office
Office européen
des brevets

(11) **EP 4 471 674 A1**

(12) **EUROPEAN PATENT APPLICATION**
published in accordance with Art. 153(4) EPC

(43) Date of publication:
**04.12.2024 Bulletin 2024/49**

(21) Application number: **23746125.6**

(22) Date of filing: **17.01.2023**

(51) International Patent Classification (IPC):
**G06N 20/00** (2019.01)

(86) International application number:
**PCT/CN2023/072593**

(87) International publication number:
**WO 2023/143243 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.01.2022 CN 202210089870**

(71) Applicant: **Hangzhou Hikvision Digital
Technology Co., Ltd.
Hangzhou, Zhejiang 310051 (CN)**

(72) Inventor: **WANG, Jin
Hangzhou, Zhejiang 310051 (CN)**

(74) Representative: **Vogelbruch, Keang et al
VOGELBRUCH Patentanwaltsgesellschaft mbH
Paul-Gerhardt-Straße 16
40593 Düsseldorf (DE)**

(54) **AUTONOMOUS LEARNING METHOD AND APPARATUS, AND ELECTRONIC DEVICE AND
MACHINE-READABLE STORAGE MEDIUM**

(57)     Provided in the present application are an autonomous learning method and apparatus, and an electronic device and a machine-readable storage medium. The method comprises: when it is determined that an autonomous learning trigger condition is met, collecting the current training data; according to the current training data, a high-value historical sample and acquired labeled data, performing online training on a first model, so as to obtain a second model; and updating the first model according to the second model. By using the method, continuous evolution of a model can be realized, and the forgetting of the model in terms of old knowledge is effectively alleviated while guaranteeing the processing performance of the model for new data.

In response to determining that an autonomous learning trigger condition is met, collect current training data, where the current training data includes unlabeled data generated within the first preset time period before a target time point, and/or unlabeled data generated within the second preset time period after the target time point, and the target time point is a time point when determining that the autonomous learning trigger condition is met — S100

Perform, according to the current training data, high-value historical samples, and acquired labeled data, online training on the first model, to obtain the second model — S110

Update the first model according to the second model — S120

FIG. 1

## Description

## TECHNICAL FIELD

The present disclosure relates to machine learning technology, and in particular, to an autonomous learning method and apparatus, an electronic device, and a machine-readable storage medium.

## BACKGROUND

An intelligent analysis autonomous learning system in video surveillance refers to an intelligent system that can perform autonomous learning by using user-site unlabeled data, and continuously improve scenario generalization capabilities of online models.

Traditional autonomous learning systems generally do not have continuous learning capabilities, which on the one hand leads to a waste of end-side hardware training resources, and on the other hand is unable to cope with the continuous changes of the online data distribution, resulting in gradual degradation of model performance after an autonomous learning.

## SUMMARY

In view of this, the present disclosure provides an autonomous learning method and apparatus, an electronic device, and a machine-readable storage medium to cope with continuous changes in online data distribution and optimize model performance.

Specifically, the present disclosure is implemented through the following technical solutions.

An autonomous learning method is provided according to the first aspect of embodiments of the present disclosure, including: in response to determining that an autonomous learning trigger condition is met, collecting current training data, where the current training data includes unlabeled data generated within a first preset time period before a target time point, and/or unlabeled data generated within a second preset time period after the target time point, and the target time point is a time point determining that an autonomous learning trigger condition is met; performing, according to the current training data, high-value historical samples, and acquired labeled data, online training on a first model, to obtain a second model, where the first model is a currently used model, and the high-value historical samples are samples during a historical autonomous learning process of the currently used model, whose output results on the model before and after performing autonomous learning have a difference greater than a preset difference threshold; and updating the first model according to the second model.

An autonomous learning apparatus is provided according to the second aspect of embodiments of the present disclosure, including: a determining unit, configured to determine whether an autonomous learning trigger condition is met; a data collecting unit, configured to, in response to determining by the determining unit that an autonomous learning trigger condition is met, collect current training data, where the current training data includes unlabeled data generated within a first preset time period before a target time point, and/or unlabeled data generated within a second preset time period after the target time point, and the target time point is a time point determining that an autonomous learning trigger condition is met; a training unit, configured to perform, according to the current training data, high-value historical samples, and acquired labeled data, online training on a first model, to obtain a second model, where the first model is a currently used model, and the high-value historical samples are samples during a historical autonomous learning process of the currently used model, whose output results on the model before and after performing autonomous learning have a difference greater than a preset difference threshold; an updating unit, configured to update the first model according to the second model.

An electronic device is provided according to the third aspect of embodiments of the present disclosure, including a processor and a storage, where the storage stores machine-executable instructions able to be executed by the processor, and the processor is configured to execute the machine-executable instructions to perform the method provided in the first aspect.

A machine-readable storage medium is provided according to the fourth aspect of embodiments of the present disclosure, where the machine-readable storage medium stores machine-executable instructions, and the method provided in the first aspect is performed when the machine-executable instructions are executed by a processor.

The technical solution provided in the present disclosure may at least bring the beneficial effects as follows. The method includes, when it is determined that the autonomous learning trigger condition is met, collecting the unlabeled data generated within a first preset time period before the current time point (i.e., the time point when it is determined that the autonomous learning trigger condition is met), and/or the unlabeled data generated within a second preset time period after the current time point, using the collected unlabeled data as the current training data, performing online training on the first model based on the current training data, high-value historical samples, and acquired labeled data, and updating the first model according to an obtained second model through the training, which realizes continuous evolution of the model and effectively alleviates the model's forgetting of old knowledge while ensuring the model's processing performance for new data.

## BRIEF DESCRIPTION OF DRAWINGS

FIG. 1 is a schematic flow diagram illustrating an autonomous learning method according to an exemplary embodiment of the present disclosure;

FIG. 2 is a complete schematic flow diagram illustrating an autonomous learning method according to an exemplary embodiment of the present disclosure;

FIG. 3 is a schematic structure diagram illustrating an autonomous learning apparatus according to an exemplary embodiment of the present disclosure;

FIG. 4 is a schematic hardware structure diagram illustrating an electronic device according to an exemplary embodiment of the present disclosure.

## DETAILED DESCRIPTION

Embodiments will be described in detail here, examples of which are illustrated in the accompanying drawings. When the following description relates to the accompanying drawings, unless specified otherwise, the same numerals in different drawings represent the same or similar elements. The implementations described in the following embodiments do not represent all implementations consistent with this application. Rather, they are merely examples of apparatuses and methods consistent with some aspects of the present disclosure as detailed in the appended claims.

The terms used in this application are merely for the purpose of describing specific embodiments, and are not intended to limit this application. The terms "a", "said" and "the" of singular forms used in this application and the appended claims are also intended to include plural forms, unless the context clearly indicates otherwise.

To help those skilled in the art to understand the technical solution provided by the embodiments of the present disclosure better and to understand the above objects, features and advantages of the examples of present disclosure more easily, the technical solution according to embodiments of the present disclosure will be further described in detail below in combination with the accompanying drawings.

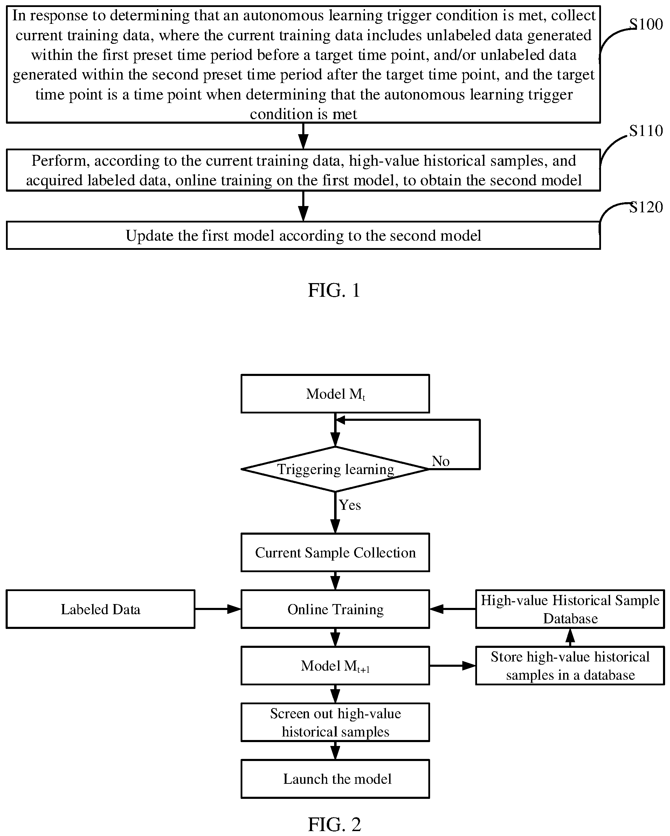

Please refer to FIG. 1, which is a schematic flow diagram illustrating an autonomous learning method according to an embodiment of the present disclosure. As illustrated in FIG. 1, the autonomous learning method may include the following steps S100 to S120.

It is to be understood that, the serial numbers of the steps in the embodiments of the present disclosure do not imply an order of execution. The order of execution of each process should be determined by its function and internal logic, and should not constitute any limitation on the implementation process of the embodiments of the present disclosure.

In step S100, in response to determining that an autonomous learning trigger condition is met, current training data is collected, where the current training data includes unlabeled data generated within a first preset time period before a target time point, and/or unlabeled data generated within a second preset time period after the target time point, and the target time point is a time point when determining that the autonomous learning trigger condition is met.

In an embodiment of the present disclosure, in order to improve scenario generalization capabilities of online models and cope with the continuous changes in the distribution of online data, when it is determined that the autonomous learning trigger condition is met, the unlabeled data generated within the preset time period (referred to as the first preset time period herein) before the current time point (i.e., the time point at which it is determined that the autonomous learning trigger condition is met, referred to as the target time point herein), and/or the unlabeled data (referred to as the current training data herein) generated within the preset time period (referred to as the second preset time period herein) after the target time point may be collected, so as to perform autonomous learning training on the currently used model (referred to as a first model herein). The preset time period here and other preset parameters or values below are not limited herein.

For example, the current training data may be data subjected to a process of the first model, which may include alarm data (i.e., data that triggers an alarm) and non-alarm data (i.e., data that does not trigger an alarm).

For example, the first preset period and the second preset period may be the same or different.

For example, one of the first preset time period and the second preset time period may be 0, i.e., only the unlabeled data before the target time point may be collected as the current training data, or only the unlabeled data after the target time point is collected as the current training data. Where unlabeled data refers to data that has not been labeled manually or with the assistance of a model. In the present disclosure, the current training data and the high-value historical samples described below are all unlabeled data. Correspondingly, labeled data refers to data that has been labeled manually or with the assistance of a model. In present disclosure, a small amount of labeled encrypted data may be carried in the memory. The autonomous learning method of the present disclosure may use current training data, high-value historical samples and acquired labeled data at the same time to train the model.

For example, when the current training data includes unlabeled data generated within the second preset time period after the target time point, a model update may be started when the current training data collecting is completed.

In step S110, according to the current training data, high-value historical samples, and acquired labeled data, online training is performed on the first model, to obtain a second model.

In an embodiment of the present disclosure, in order to ensure the accuracy of the model obtained by autonomous learning training, during the process of autonomous learning training of the first model, in addition to using the current training data acquired in step S100, some labeled data may also be used.

In addition, in order to alleviate the model's forgetting of old knowledge while ensuring the model's processing performance for new data, the training data used for autonomous learning update of the model may include historical training data in addition to the above-mentioned current training data and labeled data.

Too much historical training data will increase the amount of training data and reduce learning efficiency, while too little historical training data may not be able to guarantee the effect of alleviating the forgetting of old knowledge, and therefore, by selecting high-value historical data (referred to as high-value historical samples herein) to participate in the autonomous learning training of the model, the impact of too much historical training data on learning efficiency and the forgetting of old knowledge may be avoided.

For example, the high-value historical sample may be a sample, during a historical autonomous learning process of the currently used model, whose output results of the model before and after performing autonomous learning have a difference greater than a preset difference threshold.

For example, during each process of performing autonomous learning training on the model in the manner described in steps S100 ~ S120, assuming that it is the t-th (t≥1) autonomous learning, the model before the autonomous learning is recorded as $M_t$, and the model after the autonomous learning is recorded as $M_{t+1}$, then the high-value historical sample may include a sample whose output results of the model $M_t$ and the model $M_{t+1}$ have a difference greater than a preset difference threshold.

For example, a high-value historical sample may be selected from the current training data. During each process of performing autonomous learning training on the model in the manner described in steps S100 to S120, a high-value historical sample may be selected from the current training data based on the difference between output results, for each sample in the current training data, of the pre-training model $M_t$ (i.e., the first model) and the post-training model $M_{t+1}$ (i.e., the second model), and the selected high-value historical sample is added to a high-value historical sample database.

For example, when completing the t-th autonomous learning, from the current training data collected in the t-th autonomous learning, a sample whose output results of the model $M_t$ and the model $M_{t+1}$ have a difference greater than a preset difference threshold may be acquired as a high-value historical sample.

It should be noted that, when autonomous learning is performed on the model for the first time, high-value historical samples may not be used, or a certain number of high-value samples may be selected through manual selection as high-value historical samples, which is not limited in embodiments of the present disclosure.

Accordingly, online training may be performed for the first model, according to the current training data, high-value historical samples, and the acquired labeled data, by using a semi-supervised learning method, to obtain a post-training model (referred to as the second model herein).

In an example, considering that labeled data may affect the learning efficiency of a model, when there is more labeled data, the learning time of the model may be longer.

In addition, considering that the computation capabilities of front-end devices is usually weak, if autonomous learning is applied to front-end devices, the increase in the amount of labeled data may significantly reduce the efficiency of autonomous learning of front-end devices.

Therefore, in order to improve the efficiency of model learning while ensuring the accuracy of model training, during the process of autonomous learning in the above manner, the amount of labeled data may be smaller than the amount of current training data.

For example, the ratio of the amount of labeled data to the amount of current training data may be less than a preset ratio threshold.

For example, the labeled data may be obtained through manual labeling or through model-assisted labeling.

In step S120, the first model is updated according to the second model.

In the embodiment of the present disclosure, when the second model is obtained through training in the manner described in step S110, the first model may be updated according to the second model.

It should be noted that, in the embodiment of the present disclosure, the autonomous learning of the model is a continuous process. After the model is updated once in the manner described in steps S100 ~ S120, when it is determined again that an autonomous learning trigger condition is met, the second model obtained last time may be used as the new first model and the model may be updated again in accordance with steps S100 ~ S120.

For example, in order to reduce the difficulty of data acquisition and improve data acquisition efficiency, each time the model is updated in the manner described in step S100 ~ S120, the used labeled data may be the same.

It may be seen that in the method flow illustrated in FIG. 1, the method includes, when it is determined that the autonomous learning trigger condition is met, collecting the unlabeled data generated within the first preset time period before the current time point, and/or the unlabeled data generated within the second preset time period after the current time point, using the collected unlabeled data as the current training data, performing online training on the first model based on the current training data, high-value historical samples, and acquired labeled data, and updating the first model according to an obtained second model through the training, which realizes continuous evolution of the model and effectively alleviates the model's forgetting of old knowledge while ensuring the model's processing performance for new data.

In some embodiments, in step S100, an autonomous learning trigger condition is met, which may include, an accuracy of online inference results of the first model is lower than a preset accuracy threshold; and/or, an autonomous learning trigger instruction is detected; and/or, a preset autonomous learning time point is reached.

For example, autonomous learning may be automatically triggered and/or manually triggered.

For example, considering that after an autonomous learning update of the model, the performance of the updated model will gradually degrade with the emergence of new data, and thus, the accuracy of the model's online inference results will gradually decrease.

Accordingly, in order to ensure the model's performance, when the accuracy of the online inference results of the first model is lower than the preset accuracy threshold, it may be determined that the autonomous learning trigger condition is met, and the model may be updated through autonomous learning in the manner described in steps S100 ~ S120.

For example, in the embodiment of the present disclosure, the autonomous learning update of the model may also be triggered at a preset time or manually triggered.

Accordingly, when an autonomous learning trigger instruction is detected or a preset autonomous learning time point is reached, it may be determined that the autonomous learning trigger condition is met.

In some embodiments, the high-value historical samples used for online training are obtained through screening in the following manner: when completing a t-th autonomous learning, acquiring first samples whose output results of model $M_t$ and model $M_{t+1}$ have a difference greater than a preset difference threshold; and performing, by using clustering, similarity removal processing on the first samples, to obtain second samples, and adding the second samples as high-value historical samples to a high-value historical sample database.

For example, considering that during the process of collecting current training data, some samples with high similarity may be collected, and these samples with high similarity may all meet the condition of high-value historical sample, resulting in the presence of samples with high similarity in high-value historical samples and fewer types of samples in high-value historical samples which is not conducive to improving model performance.

For example, in a perimeter guard scenario, i.e., a monitoring front-end device is set up in a wall region of an area, to determine whether someone has climbed over the wall according to the image data collected by the monitoring front-end device. In this scenario, if there is a large tree near the wall, due to the wind, the leaves sway above the wall may cause frequent false alarms. Although the value of the data is relatively high, the similarity of the data is also relatively high.

Accordingly, for samples (referred to as first samples herein) which are screened out according to the model before and after training, whose output result differences are greater than a preset difference threshold, the first samples may be clustered by using clustering to obtain at least one cluster; for any cluster, the support set of the cluster may be determined according to each first sample in the cluster; where the distance (e.g., a Euclidean distance) between each two first samples in the same support set exceeds a preset distance threshold, and each first sample in the support set may effectively characterize the distribution of the first samples in the cluster.

For any cluster, the first samples in the support set of the cluster may be determined as high-value samples in the cluster (which may be referred to as second samples), and the remaining samples are removed as similar samples of the second samples.

In the case that second samples in each cluster are obtained in the above manner, the determined second samples may be added to the high-value historical sample database as high-value historical samples.

In an example, adding the second samples to the high-value historical sample database as described above, may include: for any second sample, before adding the second sample to the high-value historical sample database, when the number of high-value historical samples in the high-value historical sample database reaches a preset maximum number, deleting the earliest added high-value historical sample in the high-value historical sample database, and adding the second sample to the high-value historical sample database.

For example, samples in the high-value historical sample database may be updated in a first-in-first-out manner with reference to the form of a queue. When the maximum storage number of samples in the high-value historical sample database is reached, the samples may be deleted from the earliest to the latest in the order of storage time.

Accordingly, for any second sample determined in the above manner, before adding the second sample to the high-value historical sample database, it may be determined whether the number of high-value historical samples in the current high-value historical sample database reaches a preset maximum number.

In the case that the number of high-value historical samples in the current high-value historical sample database reaches a preset maximum number, the earliest added high-value historical sample in the high-value historical sample database may be deleted, and the second sample may be added to the high-value historical sample database.

In some embodiments, in step S120, updating the first model according to the second model may include performing online quantization on the second model, and replacing the first model with the quantized second model.

For example, in order to reduce the computation amount of the model and improve the processing efficiency of the model, in the case that the second model is obtained by performing autonomous learning training on the first model in the above manner, online quantization may be performed on the second model, and the quantized second model may be used to replace the first model, to achieve automatic evolution and upgrading of the model without manual intervention.

To enable those skilled in the art to better understand the technical solution provided in the embodiments of the present disclosure, the technical solution provided in the embodiments of the present disclosure will be described below in combination with specific examples.

Embodiments of the present disclosure provides an autonomous learning method that supports continuous evolution. Through a reasonable data screening strategy, high-value historical samples that have appeared in the current scene are continuously accumulated, and during the subsequent autonomous learning process, high-value historical samples and current samples (i.e., the above-mentioned current training data) are used for training at the same time, so as to ensure that the trained model may solve the recent problems such as false alarms and missed alarms, but also solve problems that have historically occurred and avoid knowledge forgetting, thereby ensuring that the autonomous learning system has the ability to continue to evolve while not forgetting the learned knowledge.

In the embodiment, the autonomous learning solution may be divided into five stages during implementation: triggering learning, current sample collecting, online training, high-value historical sample screening, and model launch.

I. Triggering learning stage

For example, in the triggering learning stage, the video stream data and the output results of the model may be inferred and diagnosed online to determine whether the alarm data is abnormal, so as to determine whether autonomous learning needs to be triggered. Alternatively, a manual trigger signal may be introduced to trigger autonomous learning or autonomous learning may be triggered at a preset time.

When it is determined that autonomous learning needs to be triggered (i.e., it is determined that an autonomous learning trigger condition is met), the current sample collecting stage may be entered.

II. Current sample collecting stage

For example, during the current sample collecting stage, data from T number of days before and after the target time point (the time point at which autonomous learning is determined to be needed to perform) may be collected for autonomous learning training.

For example, current samples may include alarm data and non-alarm data (images are stored in historical records and marked as to whether an alarm is triggered, but all belong to unlabeled data).

III. Online training stage

For example, during the online training stage, current samples (data obtained during the current sample collecting stage), high-value historical sample data, and a small amount of labeled data may be input, and online training may be performed by using a semi-supervised learning method, thereby improving the recall rate and suppressing false alarms.

For example, online training methods may include but are not limited to self-training and domain adaptation algorithms.

For example, after each online training, high-value historical samples may be mined and stored in a high-value historical sample database. Therefore, during the first training, the high-value historical sample database may be empty, and only current samples and a small amount of labeled data need to be used for training.

IV. High-value historical sample screening stage

For example, in the high-value historical sample screening stage, the difference between the pre-training model $M_t$ and the post-training model $M_{t+1}$ at the sample level may be mined (for a same sample, the greater the difference between results obtained by the two models, the higher the value).

For example, if the difference between output results of the same sample on different models is greater than a preset difference threshold, the sample may be determined as a high-value historical sample.

For example, the sample is denoted as x and the output result of the model is denoted as M(x), then, the sample whose output results of the pre-training model and the post-training model have a difference greater than the preset difference threshold may be regarded as a high-value historical sample:

$$\{x : |M_{t+1}(x) - M_t(x)| > \tau\}$$

For example, clustering or other methods may be used to find a support set in samples whose output result difference is greater than a preset difference threshold, the samples with high similarity are removed, a certain number of high-value historical samples are screened out, stored in a high-value historical sample database, and used for the next autonomous learning training.

For example, a high-value historical sample database may be used as a knowledge base, retaining high-value knowledge points that have appeared in the scenario. Using this sample database for learning may effectively alleviate the problem of knowledge forgetting and obtain continuous evolution capabilities.

High-value historical samples are screened out in each training and sent to the high-value historical sample database. After a plurality of learning sessions, the number of samples in the high-value historical sample database will continue to grow, therefore maintain and deletion work for the high-value historical sample database may be performed.

For example, during implementation, the high-value historical sample database may be updated in a queue manner: for example, a size S is set, and before the latest high-value historical sample is added to the high-value historical sample database, when the number of high-value historical samples in the high-value historical sample database reaches S, according to the first-in-first-out rule, the earliest high-value historical sample is replaced with the latest high-value historical sample, thus avoiding continuous expansion of the high-value historical sample database.

V. Model launch stage

For example, after the model training is completed, online quantization may be performed on the model to reduce the computation amount of the model, and then the model is deployed online to replace the old model, thereby achieving automatic evolution and upgrading of the model without manual intervention.

For example, the complete process of autonomous learning may be as illustrated in FIG. 2.

The method provided in the present disclosure is described above. The apparatus provided in the present disclosure is described below.

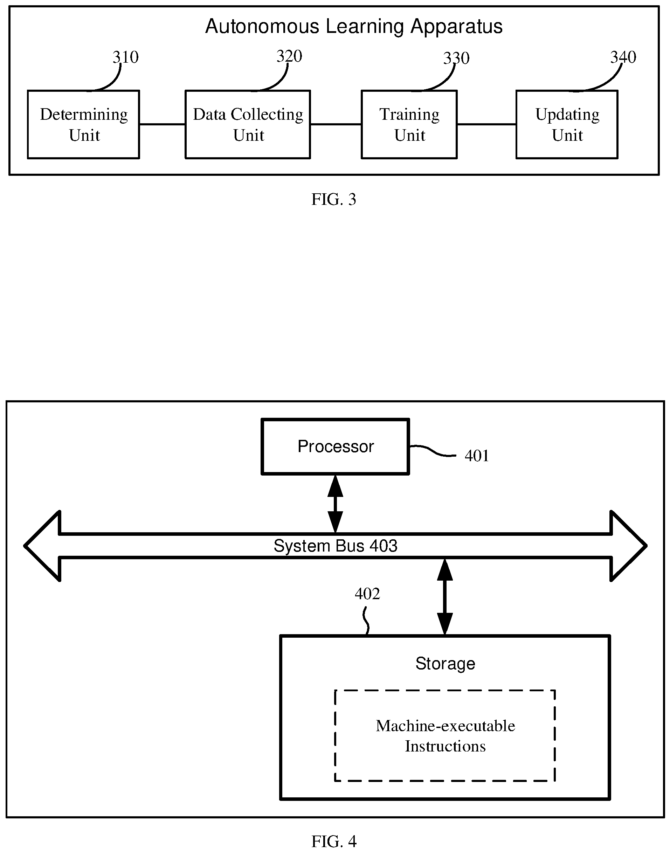

Please refer to FIG. 3, which is a structure diagram illustrating an autonomous learning apparatus according to an embodiment of the present disclosure. As illustrated in FIG. 3, the autonomous learning apparatus may include: a determining unit 310, configured to determine whether an autonomous learning trigger condition is met; a data collecting unit 320, configured to, when the determining unit 310 determines that an autonomous learning trigger condition is met, collect current training data, where the current training data includes unlabeled data generated within a first preset time period before a target time point, and/or unlabeled data generated within a second preset time period after the target time point, and the target time point is a time point when determining that the autonomous learning trigger condition is met; a training unit 330, configured to perform, according to the current training data, high-value historical samples, and acquired labeled data, online training on a first model, to obtain a second model, where the first model is a currently used model, and the high-value historical samples are samples, during a historical autonomous learning process of the currently used model, whose output results on the model before and after performing autonomous learning have a difference greater than a preset difference threshold; and an updating unit 340, configured to update the first model according to the second model.

In some embodiments, an autonomous learning trigger condition is met, which includes, an accuracy of online inference results of the first model is lower than a preset accuracy threshold; and/or, an autonomous learning trigger instruction is detected; and/or, a preset autonomous learning time point is reached.

In some embodiments, the high-value historical samples used for online training are obtained by the data collecting unit 320 through screening in the following manner: when completing the t-th autonomous learning, acquiring first samples whose output results of model $M_t$ and model $M_{t+1}$ have a difference greater than a preset difference threshold, where the model $M_t$ is the model before the t-th autonomous learning, the model $M_{t+1}$ is the model after the t-th autonomous learning, and $t \geq 1$; and performing, by using clustering, similarity removal processing on the first samples, to obtain second samples, and adding the second samples as high-value historical samples to a high-value historical sample database.

In some embodiments, the data collecting unit 320 adds the second samples to the high-value historical sample database, including: for any second sample, before adding the second sample to the high-value historical sample database, when the number of high-value historical samples in the high-value historical sample database reaches a preset maximum number, deleting the earliest added high-value historical sample in the high-value historical sample database, and adding the second sample to the high-value historical sample database.

In some embodiments, the updating unit 340 updates the first model according to the second model, including performing online quantization on the second model, and replacing the first model with the quantized second model.

The embodiments of the present disclosure provides an electronic device, including a processor and a storage, where the storage stores machine-executable instructions that can be executed by the processor, and the processor is configured to execute the machine-executable instructions to implement the autonomous learning method described above.

Please refer to FIG. 4, which is a hardware structure diagram of an electronic device according to an embodiment of the present disclosure. The electronic device may include a processor 401 and a storage 402 storing machine-executable instructions. The processor 401 and the storage 402 may communicate via a system bus 403. In addition, by reading and executing the machine-executable instructions in the storage 402 and corresponding to an autonomous learning logic, the processor 401 may execute the autonomous learning method described above.

The machine-readable storage medium 402 mentioned herein may be any of electronic, magnetic, optical, or other physical storage devices and may contain or store information such as executable instructions, data, etc. For example, the machine readable storage medium may be a Radom Access Memory (RAM), a volatile memory, a non-volatile memory, a flash memory, a storage drive (e.g. hard disk drive), a solid state hard disk, any type of storage disk (e.g., compact disk, DVD, etc.), or a similar storage medium, or a combination thereof.

In some embodiments, a machine-readable storage medium is provided, e.g., the storage 402 in FIG. 4, where the machine-readable storage medium stores machine-executable instructions, and the autonomous learning method described above is implemented when the machine-executable instructions are executed by a processor. For example, the storage medium may be a ROM, a RAM, a CD-ROM, a magnetic tape, a floppy disk and an optical data storage device, etc.

It is to be noted that the relational terms such as "first" and "second" used herein are merely intended to distinguish one entity or operation from another entity or operation rather than to require or imply any such actual relation or order existing between these entities or operations. Further, the terms "including", "containing" or any variation thereof are intended to encompass non-exclusive inclusion, so that a process, method, article or device including a series of elements includes not only those elements but also other elements not listed explicitly or those elements inherent to such a process, method, article or device. Without more restrictions, the elements defined by the sentence "including a ..." do not exclude the existence of other identical elements in the process, method, product or device.

The above is merely illustrative of preferred examples of the present disclosure but not intended to limit the present disclosure, and any modifications, equivalent substitutions, adaptations thereof made within the spirit and principles of the disclosure shall be encompassed in the scope of protection of the present disclosure.

**Claims**

1. An autonomous learning method, comprising:

   in response to determining that an autonomous learning trigger condition is met, collecting current training data, wherein the current training data comprises unlabeled data generated within a first preset time period before a target time point, and/or unlabeled data generated within a second preset time period after the target time point, and the target time point is a time point when determining that the autonomous learning trigger condition is met;

   performing, according to the current training data, high-value historical samples, and acquired labeled data, online training on a first model, to obtain a second model, wherein the first model is a currently used model, and the high-value historical samples are samples, during a historical autonomous learning process of the currently used model, whose output results of the model before and after performing autonomous learning have a difference greater than a preset difference threshold; and

   updating the first model according to the second model.

2. The method according to claim 1, wherein the autonomous learning trigger condition being met, comprises:

   an accuracy of online inference results of the first model is lower than a preset accuracy threshold; and/or,

   an autonomous learning trigger instruction is detected; and/or,

   a preset autonomous learning time point is reached.

3. The method according to claim 1, wherein the high-value historical samples used for online training are obtained through screening in the following manner:

   in response to completing a t-th autonomous learning, acquiring first samples whose output results of model $M_t$ and model $M_{t+1}$ have a difference greater than a preset difference threshold, wherein the model $M_t$ is the model before the t-th autonomous learning, the model $M_{t+1}$ is the model after the t-th autonomous learning, and t≥1;

   performing, by using clustering, similarity removal processing on the first samples, to obtain second samples, and adding the second samples as high-value historical samples to a high-value historical sample database.

4. The method according to claim 3, wherein adding the second samples to the high-value historical sample database comprises:
   for any second sample, before adding the second sample to the high-value historical sample database, in response to a number of high-value historical samples in the high-value historical sample database reaches a preset maximum number, deleting an earliest added high-value historical sample in the high-value historical sample database, and adding the second sample to the high-value historical sample database.

5. The method according to claim 1, wherein updating the first model according to the second model comprises:

performing online quantization on the second model, and replacing the first model with the quantized second model.

6. An autonomous learning apparatus, comprising:

a determining unit, configured to determine whether an autonomous learning trigger condition is met;
a data collecting unit, configured to, in response to determining, by the determining unit, that an autonomous learning trigger condition is met, collect current training data, wherein the current training data comprises unlabeled data generated within a first preset time period before a target time point, and/or unlabeled data generated within a second preset time period after the target time point, and the target time point is a time point when determining that the autonomous learning trigger condition is met;
a training unit, configured to perform, according to the current training data, high-value historical samples, and acquired labeled data, online training on a first model, to obtain a second model, wherein the first model is a currently used model, and the high-value historical samples are samples, during a historical autonomous learning process of the currently used model, whose output results on the model before and after performing autonomous learning have a difference greater than a preset difference threshold;
an updating unit, configured to update the first model according to the second model.

7. The apparatus according to claim 6, wherein the autonomous learning trigger condition is met, comprising:

an accuracy of online inference results of the first model is lower than a preset accuracy threshold; and/or,
an autonomous learning trigger instruction is detected; and/or,
a preset autonomous learning time point is reached.

8. The apparatus according to claim 6, wherein the data collecting unit obtains high-value historical samples used for online training through screening in following manner:

in response to completing a t-th autonomous learning, acquiring first samples whose output results on model $M_t$ and model $M_{t+1}$ have a difference greater than a preset difference threshold, wherein the model $M_t$ is the model before the t-th autonomous learning, the model $M_{t+1}$ is the model after the t-th autonomous learning, and t≥1;
performing, by using clustering, similarity removal processing on the first samples, to obtain second samples, and adding the second samples as high-value historical samples to a high-value historical sample database.

9. The apparatus according to claim 8, wherein the data collecting unit adds the second samples to the high-value historical sample database, comprising:
for any second sample, before adding the second sample to the high-value historical sample database, in response to a number of high-value historical samples in the high-value historical sample database reaches a preset maximum number, deleting an earliest added high-value historical sample in the high-value historical sample database, and adding the second sample to the high-value historical sample database.

10. The apparatus according to claim 6, wherein the data collecting unit updates the first model according to the second model comprises:
performing online quantization on the second model, and replacing the first model with the quantized second model.

11. An electronic device comprising a processor and a storage, wherein the storage stores machine-executable instructions able to be executed by the processor, and the processor is configured to execute the machine-executable instructions to perform the method of any one of claims 1-5.

12. A machine-readable storage medium storing machine-executable instructions when executed by a processor to perform the method of any one of claims 1-5.

In response to determining that an autonomous learning trigger condition is met, collect current training data, where the current training data includes unlabeled data generated within the first preset time period before a target time point, and/or unlabeled data generated within the second preset time period after the target time point, and the target time point is a time point when determining that the autonomous learning trigger condition is met — S100

Perform, according to the current training data, high-value historical samples, and acquired labeled data, online training on the first model, to obtain the second model — S110

Update the first model according to the second model — S120

FIG. 1

Model $M_t$

Triggering learning — No

Yes

Current Sample Collection

Labeled Data → Online Training ← High-value Historical Sample Database

Model $M_{t+1}$ → Store high-value historical samples in a database

Screen out high-value historical samples

Launch the model

FIG. 2

## Autonomous Learning Apparatus

310       320       330       340

| Determining Unit | Data Collecting Unit | Training Unit | Updating Unit |

FIG. 3

Processor — 401

System Bus 403

402

Storage

Machine-executable Instructions

FIG. 4

## INTERNATIONAL SEARCH REPORT

International application No.

**PCT/CN2023/072593**

### A. CLASSIFICATION OF SUBJECT MATTER

G06N 20/00(2019.01)i

According to International Patent Classification (IPC) or to both national classification and IPC

### B. FIELDS SEARCHED

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNTXT, CNKI, ENTXT, DWPI: 模型, 训练, 自主学习, 历史, 时间, 阈值, 更新, model, training, autonomous learning, history, time, threshold, update

### C. DOCUMENTS CONSIDERED TO BE RELEVANT

| Category* | Citation of document, with indication, where appropriate, of the relevant passages | Relevant to claim No. |
|---|---|---|
| PX | CN 114444717 A (HANGZHOU HIKVISION DIGITAL TECHNOLOGY CO., LTD.) 06 May 2022 (2022-05-06) <br> description, paragraphs [0006]-[0124] | 1-12 |
| Y | CN 112036579 A (PING AN TECHNOLOGY (SHENZHEN) CO., LTD.) 04 December 2020 (2020-12-04) <br> description, paragraphs [0007]-[0128] | 1-12 |
| Y | CN 111191791 A (TENCENT CLOUD COMPUTING (BEIJING) CO., LTD.) 22 May 2020 (2020-05-22) <br> description, paragraphs [0006]-[0209] | 1-12 |
| Y | CN 113344196 A (JD CITY (BEIJING) DIGITAL TECHNOLOGY CO., LTD.) 03 September 2021 (2021-09-03) <br> description, paragraphs [0006]-[0201] | 1, 5-6, 10-12 |
| A | CN 110705717 A (ALIPAY (HANGZHOU) INFORMATION TECHNOLOGY CO., LTD.) 17 January 2020 (2020-01-17) <br> entire description | 1-12 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **24 February 2023** | **30 March 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

# EP 4 471 674 A1

**INTERNATIONAL SEARCH REPORT**

International application No.

**PCT/CN2023/072593**

## C. DOCUMENTS CONSIDERED TO BE RELEVANT

| Category* | Citation of document, with indication, where appropriate, of the relevant passages | Relevant to claim No. |
|---|---|---|
| A | CN 109815991 A (BEIJING URBAN NETWORK NEIGHBOR INFORMATION TECHNOLOGY CO., LTD.) 28 May 2019 (2019-05-28)<br>entire description | 1-12 |
| A | US 2020218982 A1 (MICROSOFT TECHNOLOGY LICENSING L.L.C.) 09 July 2020 (2020-07-09)<br>entire description | 1-12 |
| A | US 2020234196 A1 (FUJITSU LTD.) 23 July 2020 (2020-07-23)<br>entire description | 1-12 |
| A | US 2021192363 A1 (HRL LABORATORIES, L.L.C.) 24 June 2021 (2021-06-24)<br>entire description | 1-12 |

Form PCT/ISA/210 (second sheet) (July 2022)

**INTERNATIONAL SEARCH REPORT**
Information on patent family members

International application No.

**PCT/CN2023/072593**

| Patent document cited in search report | | | Publication date (day/month/year) | Patent family member(s) | | | Publication date (day/month/year) |
|---|---|---|---|---|---|---|---|
| CN | 114444717 | A | 06 May 2022 | None | | | |
| CN | 112036579 | A | 04 December 2020 | None | | | |
| CN | 111191791 | A | 22 May 2020 | None | | | |
| CN | 113344196 | A | 03 September 2021 | None | | | |
| CN | 110705717 | A | 17 January 2020 | None | | | |
| CN | 109815991 | A | 28 May 2019 | None | | | |
| US | 2020218982 | A1 | 09 July 2020 | EP | 3906507 | A1 | 10 November 2021 |
| | | | | WO | 2020142223 | A1 | 09 July 2020 |
| US | 2020234196 | A1 | 23 July 2020 | JP | 2020119044 | A | 06 August 2020 |
| | | | | JP | 7151500 | B2 | 12 October 2022 |
| | | | | EP | 3683736 | A1 | 22 July 2020 |
| US | 2021192363 | A1 | 24 June 2021 | WO | 2021133458 | A1 | 01 July 2021 |

Form PCT/ISA/210 (patent family annex) (July 2022)